# EUROPÄISCHE PATENTSCHRIFT

(11) **EP 1 580 451 B1**
(45) Veröffentlichungstag und Bekanntmachung des Hinweises auf die Patenterteilung: **25.04.2007**
(21) Anmeldenummer: 05004790.1
(22) Anmeldetag: 04.03.2005
(51) Int. Cl.: F16F 13/14, F16F 1/38

(54) **Hydraulisch dämpfendes Gummilager**
Hydraulically damping bushing
Manchon à amortissement hydraulique

(30) Priorität: 22.03.2004 DE 102004014328
(43) Veröffentlichungstag der Anmeldung: 28.09.2005
(73) Patentinhaber: ZF FRIEDRICHSHAFEN AG, 88038 Friedrichshafen (DE)
(72) Erfinder: Schäfer, Christof, 53489 Sinzig Westum (DE); Schmitz, Michael, 53115 Bonn (DE)

(56) Entgegenhaltungen:
- EP-A- 0 331 916
- DE-A1- 19 937 714
- US-A- 4 872 650
- PATENT ABSTRACTS OF JAPAN Bd. 005, Nr. 123 (M-082), 8. August 1981 (1981-08-08) & JP 56 063141 A (NISSAN MOTOR CO LTD), 29. Mai 1981 (1981-05-29)

## Beschreibung

Die Erfindung betrifft ein hydraulisch dämpfendes, auch als Hydrobuchse bezeichnetes Buchsengummilagen entsprechend dem Oberbegriff des Anspruchs 1 Gattungsgemäße Lager dieser Art bestehen aus einem elastomeren Lagerkörper, mit einem darin einvulkanisierten, die Lagerachse konzentrisch oder exzentrisch umgebenden Innenteil aus Metall oder Kunststoff, und einer den Lagerkörper umgebenden Aufnahmehülse. In dem Lagerkörper sind wenigstens zwei Kammern zur Aufnahme eines fluiden Dämpfungsmittels ausgebildet, die durch mindestens einen Kanal miteinander verbunden sind.

Gummilager werden insbesondere im Fahrzeugbau im großen Umfang und in unterschiedlichster Form eingesetzt. Hier dienen sie beispielsweise zur Lagerung des Fahrzeugaggregats oder des Hilfsrahmens oder sie werden im Bereich der Fahrzeugachsen verbaut. Buchsenlager dienen unter anderem der Lagerung der Querlenker des Fahrwerks.

Da jedoch Gummibuchsen herkömmlicher Bauart hohe Schwingungsamplituden bei bestimmten Frequenzen, wie sie beim Betrieb eines Fahrzeugs beispielsweise durch Fahrbahnunebenheiten auftreten, nur unzureichend dämpfen, werden im Bereich des Fahrwerks bereits seit längerem Hydrobuchsen eingesetzt. In dem elastomeren Lagerkörper solcher Hydrobuchsen sind zwei oder mehr mit einem fluiden Dämpfungsmittel gefüllte Kammern angeordnet. Die Kammern sind über einen Kanal oder über ein Kanalsystem strömungsleitend miteinander verbunden. Schwingungen niedriger Frequenz werden bei solchen Lagern hauptsächlich durch den elastomeren Lagerkörper bedämpft. Mit steigender Frequenz wird die Dämpfungswirkung jedoch zunehmend durch das aus den Kammern, dem oder den Kanälen und dem fluiden Dämpfungsmittel gebildete schwingungsfähige System bestimmt. Dabei wird beim Einfedern einer Kammer das darin befindliche Dämpfungsmittel über den Kanal bzw. das Kanalsystem in eine gegenüber liegende Kammer verdrängt.

Ein entsprechendes Lager wird beispielsweise durch die DE-A-41 17 129 beschrieben. Es hat sich jedoch gezeigt, dass Buchsenlager mit dem beschriebenen Aufbau insbesondere gegenüber radial von außen auf die Kammern einwirkenden Kräften nur eine begrenzte Steifigkeit aufweisen. Zur Absorption hoher statischer Belastungen und im Hinblick auf die Lebensdauer und Standfähigkeit der Lager ist es aber wünschenswert, dass die Lager auch in diesem Bereich eine hohe Steifigkeit besitzen bzw. dass es möglich ist, diese Steifigkeit durch einfache Maßnahmen gezielt zu beeinflussen. Neben Lagern mit Massedämpfungswirkung sind noch als Drossellager bezeichnete Lager mit einem kurzen die Kammern direkt verbindenden Drosselkanal bekannt.

Des Weiteren offenbart die EP-A-0 331 916 ein hydraulisch dämpfendes Buchsengummilager, welches aus einem elastomeren Lagerkörper, mit einem darin einvulkanisiertem, die Lagerachse konzentrisch umgebenden Innenteil aus Metall oder Kunststoff und wenigstens zwei, durch einen Kanal miteinander verbundenen Kammern zur Aufnahme eines fluiden Dämpfungsmittels, und aus einer den Lagerkörper umgebenden Aufnahmehülse besteht. Der Lagerkörper weist gegenüber den Kammern auf den Umfang versetzt angeordnete, sich in axialer Richtung durch den Lagerkörper erstreckende Nut auf, wobei das Verhältnis des radialen Außenmaßes des Lagerkörpers zum radialen Innenmaß der Aufnahmehülse im Bereich der Kammern größer ist als im Bereich der Nut, so dass der Lagerkörper nach der Montage in der Aufnahmehülse im Bereich der Nut radial unter Vorspannung steht.

Weiterhin zeigt die US-A-4,872,650 ein hydraulisch dämpfendes Buchsengummilager mit einem Innenteil und einem konzentrisch hierzu angeordneten Außenhülse, wobei zwischen dem Innenteil und der Außenhülse ein elastomerer Lagerkörper angeordnet ist. Innerhalb des elastomeren Lagerkörpers ist eine sich radial erstreckende und durch den Lagerkörper hindurchreichende nierenförmige Ausnehmung angeordnet. Während des Zusammenbaus wird der Lagerkörper gleichmäßig in alle radiale Richtungen vorgespannt.

Aufgabe der Erfindung ist es, ein hydraulisch dämpfendes Buchsengummilager zu schaffen, bei welchem auch im Bereich der Kammern gegenüber einer aus radialer Richtung auf die Kammern einwirkenden Kraft eine hohe Steifigkeit realisierbar und die Steifigkeit vorzugsweise durch die Dimensionierung und geeignete Wahl des Materials einfach zu beeinflussen ist.

Die Aufgabe wird durch ein Buchsengummilager mit den kennzeichnenden Merkmalen des Hauptanspruchs gelöst. Vorteilhafte Aus- bzw. Weiterbildungen des erfindungsgemäßen Lagers sind durch die Unteransprüche gegeben.

Die vorgeschlagene Hydrobuchse besteht in an sich bekannter Weise aus einem beispielsweise zylinderförmigen elastomeren Lagerkörper, in welchem wenigstens zwei Kammern ausgebildet sind. Die Kammern dienen der Aufnahme eines fluiden Dämpfungsmittels und sind durch mindestens einen Kanal miteinander verbundenen. Der elastomere Lagerkörper umschließt ein einvulkanisiertes, die Lagerachse konzentrisch oder exzentrisch umgebendes Innenteil aus Metall oder Kunststoff und ist nach der Montage des Lagers von einer ihn aufnehmenden Aufnahmehülse bzw. Außenhülse umgeben. In erfindungswesentlicher Weise erstreckt sich durch den Lagerkörper mindestens eine gegenüber den Kammern auf dem Umfang versetzt angeordnete, in axialer Richtung verlaufende Nut. Gleichzeitig sind der Lagerkörper und die zu seiner Aufnahme dienende Außenhülse so dimensioniert, dass das Verhältnis des radialen Außenmaßes des unmontierten Lagerkörpers zum radialen Innenmaß der Aufnahmehülse im Bereich der Kammern größer ist, als im Bereich der Nut. Hierdurch wird der Lagerkörper beim Einbringen in die Aufnahmehülse im Bereich der Nut in radialer Richtung vorgespannt montiert. Die Steifigkeit des Lagers in der radial über die Kammern verlaufenden Richtung (Y-Richtung) wird dadurch in vorteilhafter Weise erhöht. Darüber hinaus ist es möglich, über diese Vorspannung des Lagerkörpers die axiale Kennlinie des Lagers zu beeinflussen.

Im Hinblick auf die angesprochenen Verhältnisse zwischen den Außenmaßen des Lagerkörpers und den Innenmaßen der Aufnahmehülse ist es beispielsweise denkbar, dass der Lagerkörper einen kreisförmigen und die Aufnahmehülse einen elliptischen Querschnitt besitzt, wobei die kurze Nebenachse des elliptischen Querschnitts der Außenhülse nach der Montage des Lagerkörpers durch dessen Kammern verläuft. Bei der für die Praxis sicherlich relevanteren Ausführungsform besitzt jedoch die Aufnahmehülse einen Kreisquerschnitt, wohingegen der Lagerkörper mit einem elliptischen Querschnitt ausgebildet ist, bei dem die Hauptachse durch die Kammern und die Nebenachse durch die Nut verläuft.

Bei dem erfindungsgemäßen Buchsenlager sind die Nuten in dem radial innen liegenden Abschnitt nierenförmig erweitert. Gemäß einer bevorzugten Ausführungsform weist die Hydraulikeinheit zwei auf ihrem Umfang einander gegenüberliegende Nuten auf.

Im Hinblick auf den jeweiligen Einsatzzweck des Lagers kann der Kanal unterschiedlich ausgebildet sein - man unterscheidet hier Buchsenlager mit Massedämpfung und so genannte Drossellager. Zur Realisierung eines erfindungsgemäß gestalteten Buchsenlagers mit Massedämpfung wird dabei der Kanal durch in der Umfangsrichtung umlaufend angeordnete Kanalelemente mit einem radial nach außen geöffneten U-Profil gebildet. Die Kammern, der sie verbindende Kanal und das Dämpfungsmittel bilden ein schwingungsfähiges System aus, bei welchem die Massedämpfung durch das, im Falle auftretender Belastungen, zwischen den Kammern hin und her schwingende Dämpfungsmittel bewirkt wird. Entsprechend einer möglichen Gestaltung ist das zuvor beschriebene Lager mit Massedämpfung so ausgebildet, dass die Nut durch den auf dem Umfang umlaufenden Kanal verläuft. Im unmontierten Zustand, also vor dem Einbringen des Lagerkörpers in die Aufnahmehülse, ist daher der Kanal durch die Nut geteilt. Jedoch werden die Kanalteile durch den Einbau in die Aufnahmehülse und eine entsprechende Verformung des dann im Bereich der Nut unter radialer Vorspannung stehenden Lagerkörpers zusammengeführt. Dabei werden sie durch das vorgespannte Elastomer und eine entsprechende Gestaltung der Kanalteilwandungen nach außen und gegen die vorhandene nierenförmige Erweiterung der Nut abgedichtet. Bei einer praxisgerechten Ausbildung sind die Kanalelemente, ebenso wie das Innenteil, vom Lagerkörper eingeschlossen.

Eine weitere Ausgestaltung ist dadurch gegeben, dass die als U-Profil ausgebildeten Kanalelemente im Bereich des Übergangs zwischen dem axial innen liegenden Schenkel und der die Schenkel des U-Profils verbindenden Seite abgerundet sind. Hierdurch werden Beschädigungen des Elastomers oder gar ein Abreißen des Elastomerkörpers vom Kanal im Falle hoher radialer Belastungen oder aufgrund dauerhafter Belastungen des Lagers verhindert.

Im Sinne der Erfindung ist auch eine Ausbildungsform des Lagers mit einem, wenigstens an einem seiner axialen Enden ausgebildeten, vorzugsweise radial, gegebenenfalls aber auch axial wirkenden Anschlag. Dieser wird durch ein hohlzylindrisches, zwischen dem Lagerkörper und den Kanalelementen eingeschobenes Formteil realisiert. Vorzugsweise weist dieses Formteil dazu eine Anschlagschulter auf. Bei einer besonders vorteilhaften Weiterbildung dieser Ausbildungsform ist auf der die Schenkel des U-Profils verbindenden Seite der Kanalelemente mindestens eine radial nach innen weisende Noppe angeordnet, die in eine entsprechende Ausnehmung des den Anschlag bildenden Formteils eingreift. Hierdurch wird eine zuverlässige formschlüssige Verbindung zwischen dem Lagerkörper und dem Anschlag erreicht. Entsprechend einer vorteilhaften Weiterbildung wird dieser Formschluss noch durch einen nach axial außen verlaufenden Hinterschnitt verbessert, welcher auf der die Schenkel des U-Profils verbindenden Seite ausgebildet ist.

Wie auch von Hydrobuchsen mit einem Massedämpfungssystem aus dem Stand der Technik bekannt, ist bei einer Ausbildung der Erfindung eine den Kanal überbrückende Bypassverbindung zwischen den Kammern ausgebildet, über die das Dämpfungsmittel im Falle plötzlich auftretender hoher Belastungen und eines damit gegebenenfalls in einer Kammer entstehenden Überdrucks unmittelbar in die jeweils andere Kammer strömen kann. Durch eine entsprechende Dimensionierung und/oder gegebenenfalls durch Vorspannung des Bypasses wird eine Art Ventilwirkung erzielt durch die sichergestellt wird, dass das Dämpfungsmittel tatsächlich nur beim Auftreten eines Überdrucks über den Bypass strömt.

Die Kanalelemente können bei dem entsprechend der Erfindung ausgebildeten Lager aus unterschiedlichen Materialien bestehen. Vorzugsweise bestehen sie aus Aluminiumdruckguss. Jedoch können hierfür auch Blechstanzteile oder entsprechend geformte Einlegeteile aus einem Kunststoff verwendet werden.

Die Erfindung soll nachfolgend anhand eines Ausführungsbeispiels nochmals näher erläutert werden.

In den zugehörigen Zeichnungen zeigen:
- Fig. 1:: Das erfindungsgemäße Lager ohne Aufnahmehülse in einer Schnittdarstellung mit radial geführtem Schnitt,
- Fig. 2:: Das Lager nach der Fig. 1 nach der Montage in der Außen- bzw. Aufnahmehülse in einer Draufsicht aus der Richtung eines axialen Endes,
- Fig. 3:: Das Lager nach Fig. 1 in einer axial geschnittenen Darstellung,
- Fig. 4:: Die Einzelheit E des Lagers gemäß Fig. 3.

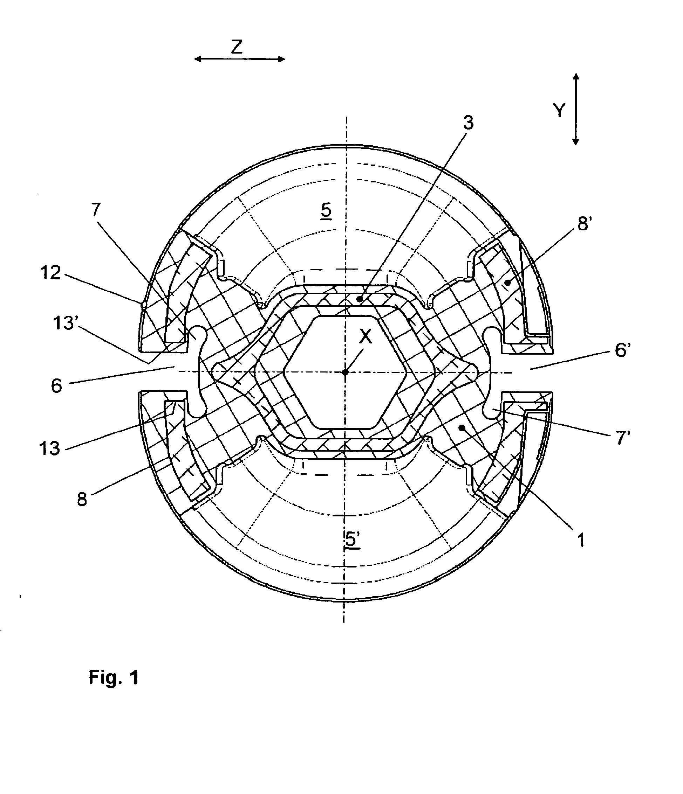

Die Fig. 1 zeigt beispielhaft eine Ausführungsform des erfindungsgemäßen Lagers in einer radial geschnittenen Darstellung. In der Darstellung ist das Lager ohne Außenhülse gezeigt. Dargestellt sind der elastomere Lagerkörper 1 und das von ihm eingeschlossene, in diesem Falle die Lagerachse X konzentrisch umgebende Innenteil 3.

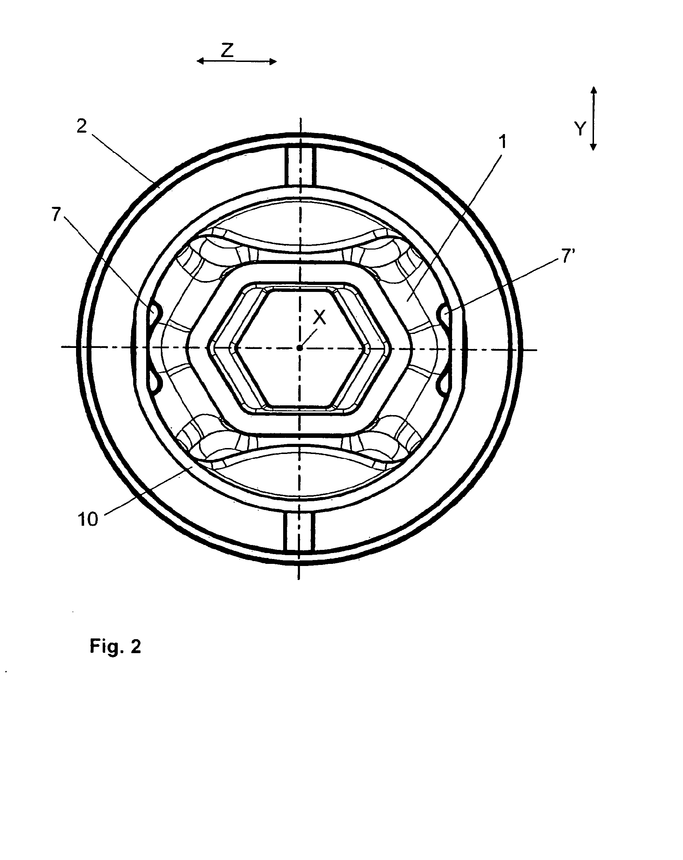

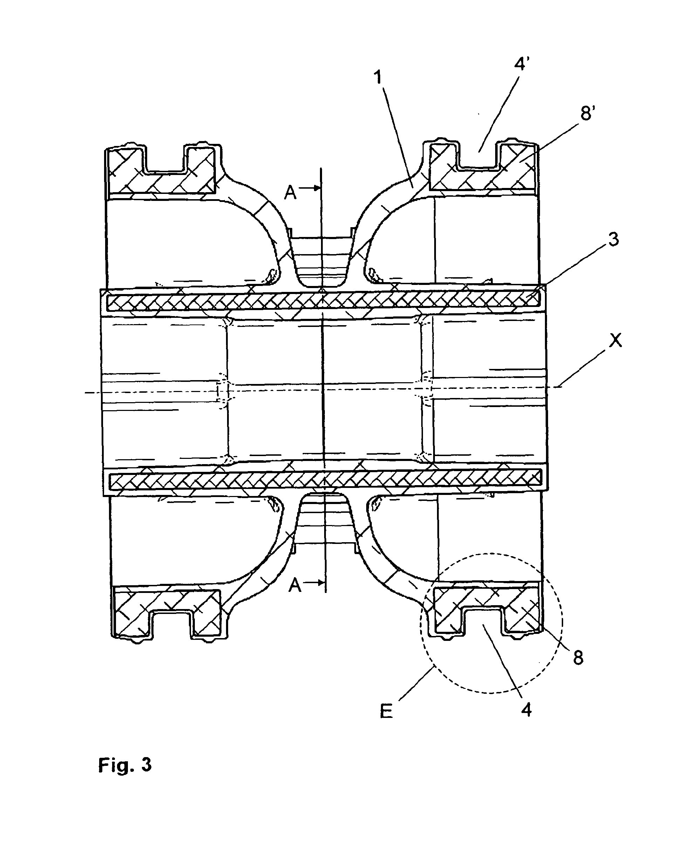

Von dem elastomeren Lagerkörper 1 sind außerdem Kanalelemente 8, 8' zur Ausbildung eines Kanals 4, 4' (Kanal in der Fig. 1 nicht erkennbar - siehe hierzu Fig. 3) eingeschlossen. Zwischen den beiden hierdurch gebildeten Stegen sind die Kammern 5, 5' angeordnet, von denen nach der Montage des Lagers in der Außenhülse 2 (siehe Fig. 2) das Dämpfungsmittel aufgenommen wird. Über den Kanal 4, 4' der vorzugsweise mittels aus Aluminiumdruckguss bestehenden Kanalelementen 8, 8' mit einem u-förmigen Querschnitt gebildet wird, kann das Dämpfungsmittel zwischen den Kammern 5, 5' hin und her strömen. Die Kammern 5, 5', der Kanal 4, 4' und das später, nach der Montage in der Außenhülse 2 darin eingeschlossene Dämpfungsmittel bilden ein Massedämpfungssystem aus. Abweichend von dem insoweit üblichen Aufbau sind in dem Lagerkörper 1 bei dem erfindungsgemäß ausgebildeten Lager zwei axial verlaufende Nuten 6, 6' vorgesehen. Durch die Nuten 6, 6' ist der Kanal 4, 4' in zwei Teile geteilt. Im radial Inneren des Lagerkörpers 1 sind die durch die Nuten 6, 6' ausgebildeten Ausnehmungen zu einer Niere 7, 7' erweitert. Hinsichtlich seiner äußeren Kontur weist der dargestellte Lagerkörper 1 eine leicht elliptische Form auf. Dabei verläuft die Hauptachse der Ellipse durch die Kammern 5, 5'. Die kürzere Nebenachse verläuft durch die beiden Nuten 6, 6'.

In dieser Ausbildungsform ist der dargestellte Lagerkörper 1 zur Aufnahme bzw. Montage in einer Aufnahmehülse 2 mit einem kreisrunden Querschnitt bestimmt. Folglich ist das zwischen den radialen Außenmaßen des Lagerkörpers 1 und den radialen Innenmaßen der in der Fig. 1 nicht gezeigten Außenhülse 2 bestehende Verhältnis im Bereich der Kammern 5, 5' größer als im Bereich der Nuten 6, 6'. Hierdurch wird erreicht, dass der Lagerkörper 1 nach der Montage in der Außenhülse 2 im Bereich der Nuten 6,6' unter radialer Vorspannung steht. Gleichzeitig werden in diesem Bereich die eigentlich durch die Nut getrennten Kanalteile 4 und 4' bei der Montage zu einem Kanal 4, 4' zusammengeführt. In seiner Eigenschaft als Teil des Massedämpfungssystems ermöglicht der Kanal 4, 4' das Strömen des Dämpfungsmittels von einer Kammer 5, 5' zur jeweils anderen. Zum Abbau, im Falle starker radialer Belastungen, eventuell plötzlich auftretender Überdrücke ist bei der beispielhaft dargestellten Ausführungsform des erfindungsgemäßen Lagers zusätzlich ein Bypass 12 als Direktverbindung zwischen den Kammern 5, 5' vorgesehen.

Die Fig. 2 zeigt das Buchsenlager im montierten Zustand, wobei die zuvor anhand der Fig. 1 erläuterten Teile von einer vorzugsweise metallischen Außenhülse 2 aufgenommen sind. Das Lager ist in einer Draufsicht aus der Sicht eines seiner axialen Enden dargestellt. Aufgrund der erläuterten Dimensionierungsverhältnisse zwischen dem Lagerkörper 1 und der Außenhülse 2 steht der Lagerkörper 1 im Bereich der Nuten 6, 6', hier zu erkennen durch die Nieren 7, 7', unter radialer Vorspannung. Der ursprünglich geteilte Kanal 4, 4' schließt sich hierbei. Durch die eingebrachte Vorspannung weist das Lager in vorteilhafter Weise in der Y-Richtung eine erhöhte Steifigkeit auf. Gleichzeitig wird die Steifigkeit in Z-Richtung durch die Nieren 7, 7' gesenkt. Die Abdichtung der Kanalteilhälften 4 und 4' nach außen und gegenüber den Nieren 7, 7' erfolgt über das in diesem Bereich vorgespannte Elastomer bzw. den vorgespannten Gummi, unterstützt durch eine geeignete Gestaltung der Kanalteilwandungen 13, 13' (siehe hierzu Fig. 1). Durch die aufgrund der konstruktiven Gestaltung erreichte radiale Vorspannung sind die Stege des Lagers in der Konstruktionslage in vorteilhafter Weise zugfrei. Die im Bereich der Nuten 6, 6' ausgeformten Nieren 7, 7' ermöglichen höhere Verdrehungswinkel, ohne dass das Lager hierdurch beschädigt würde. In besonders vorteilhafter Weise kann durch die aufgrund der Radialmaßverhältnisse zwischen Lagerkörper 1 und Außenhülse 2 erreichte Vorspannung die Shore-Härte des für den Lagerkörper 1 verwendeten Gummis reduziert werden, wodurch sich das dynamische Verhalten des Lagers verbessert. Die dargestellte beispielhafte Ausbildung des erfindungsgemäßen Buchsenlagers verfügt außerdem über einen Radialanschlag, welcher durch ein zwischen dem Lagerkörper 1 und den Kanalelementen 8, 8' eingeschobenes hohlzylindrisches Formteil 10 mit einer Anschlagschulter realisiert ist.

Die Fig. 3 zeigt das vorstehend beschriebene Lager in einer Schnittdarstellung mit einem axial geführten Schnitt. In der Darstellung ist die Schnittlinie A-A angetragen, durch welche der zur Darstellung nach der Fig. 1 führende Schnitt geführt ist. Zu erkennen ist der elastomere Lagerkörper 1 mit dem von ihm eingeschlossenen Innenteil 3, welches die Lagerachse X konzentrisch umgibt. Durch die im radial äußeren Bereich des elastomeren Lagerkörpers 1 eingeschlossenen Kanalelemente 8, 8' wird der Kanal 4, 4' ausgebildet.

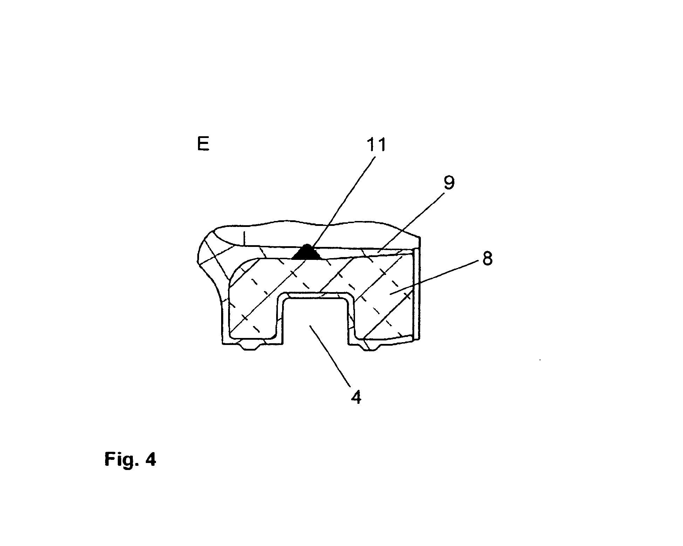

In der Fig. 4 ist die Einzelheit E gemäß der Darstellung des Lagers in der Fig. 3 gezeigt. Die Einzelheit betrifft eine vorteilhafte Weiterbildung des erfindungsgemäßen Lagers. Gemäß dieser Weiterbildung ist zwischen den zur Ausbildung des Kanals 4, 4' dienenden Kanalelementen 8, 8' und dem sie umschließenden Lagerkörper 1 nach axial außen verlaufend, ein auf dem Umfang umlaufender Hinterschnitt 9 ausgebildet. An dem Kanalelement 8 ist zudem auf der die Schenkel seines U-Profils verbindenden Seite eine radial nach innen weisende Noppe 11 bzw. ein Aluminiumpin ausgebildet, die bzw. der in eine entsprechende Ausnehmung des hier nicht dargestellten, den Anschlag ausbildenden Formteils 10 eingreift. Durch den Aluminium-Pin 11 und den Hinterschnitt 9 wird später, nach der Montage in der Aufnahmehülse 2, eine gute formschlüssige Verbindung zwischen Kanalelement 8, 8' und dem Anschlag bzw. dem Formteil 10 erreicht. Weiterhin ist zu erkennen, dass das Kanalelement 8 zur axialen Mitte des Lagers auf der radial innen liegenden Seite abgerundet ist. Hierdurch wird eine Beschädigung bzw. ein Abreißen des Lagerkörpers 4 bei Belastungen durch radial eingetragene Kräfte verhindert.

### Bezugszeichenliste

- 1: Lagerkörper
- 2: Aufnahme- bzw. Außenhülse
- 3: Innenteil
- 4, 4': Kanal
- 5, 5': Kammer
- 6, 6': Nut
- 7, 7': Niere
- 8, 8': Kanalelement
- 9: Hinterschnitt
- 10: Formteil für Anschlag
- 11: Noppe oder Pin
- 12: Bypass
- 13, 13': Kanalteilwandung

## Patentansprüche

1. Hydraulisch dämpfendes Buchsengummilager, welches aus einem elastomeren Lagerkörper (1), mit einem darin einvulkanisierten, die Lagerachse konzentrisch oder exzentrisch umgebenden Innenteil (3) aus Metall oder Kunststoff und wenigstens zwei, durch mindestens einen Kanal (4, 4') miteinander verbundenen Kammern (5, 5') zur Aufnahme eines fluiden Dämpfungsmittels, und aus einer den Lagerkörper (1) umgebenden Aufnahmehülse (2) besteht,
**dadurch gekennzeichnet, dass**
der Lagerkörper (1) mindestens eine gegenüber den Kammern (5, 5') auf dem Umfang versetzt angeordnete, sich in axialer Richtung (X) durch den Lagerkörper (1) erstreckende, in dem radial innen liegenden Abschnitt zu einer Niere (7, 7') erweiterten Nut (6, 6') aufweist, wobei das Verhältnis des radialen Außenmaßes des Lagerkörpers (1) zum radialen Innenmaß der Aufnahmehülse (2) im Bereich der Kammern (5, 5') größer ist als im Bereich der Nut (6, 6'), so dass der Lagerkörper (1) nach der Montage in der Aufnahmehülse (2) im Bereich der Nut (6, 6') radial unter Vorspannung steht, **dass** der Kanal (4, 4') durch in der Umfangsrichtung umlaufend angeordnete Kanalelemente (8, 8') gebildet ist und dass die Kammern (5, 5'), der sie verbindende Kanal (4, 4') sowie das Dämpfungsmittel ein schwingungsfähiges Massedämpfungssystem ausbilden, wobei der Kanal (4, 4') vor der Montage des Lagerkörpers (1) in der Außenhülse (2) durch die Nut (6, 6') geteilt ist und der Lagerkörper (1) nach der Montage in der Aufnahmehülse (2), im Bereich der Nut (6, 6') radial unter Vorspannung stehend, derart verformt ist, dass die ursprünglich getrennten Kanalteile (4) und (4') zusammengeführt sowie durch das in diesem Bereich vorgespannte Elastomer und entsprechend ausgeformte Kanalteilwandungen (13, 13') sowohl nach außen als auch gegen die Nieren (7, 7') abgedichtet sind.

2. Hydraulisch dämpfendes Buchsengummilager nach Anspruch 1,
**dadurch gekennzeichnet, dass** der Lagerkörper (1) eine im Wesentlichen elliptische und die Aufnahmehülse (2) eine im Wesentlichen kreisförmige Querschnittsfläche aufweist, wobei die Hauptachse der elliptischen Querschnittsfläche des Lagerkörpers (1) durch dessen Kammern (5, 5') und die Nebenachse durch die Nut (6, 6') verläuft.

3. Hydraulisch dämpfendes Buchsengummilager nach Anspruch 1 oder 2,
**dadurch gekennzeichnet, dass** der Lagerkörper (1) zwei auf seinem Umfang einander gegenüberliegende Nuten (6, 6') aufweist.

4. Hydraulisch dämpfendes Buchsengummilager nach Anspruch 1 oder 3,
**dadurch gekennzeichnet, dass** der Kanal (4, 4') durch in der Umfangsrichtung umlaufend angeordnete Kanalelemente (8, 8') mit einem nach radial außen geöffneten U-Profil gebildet ist.

5. Hydraulisch dämpfendes Buchsengummilager nach Anspruch 1,
**dadurch gekennzeichnet, dass** den Kanal (4, 4') ausbildende Kanalelemente (8, 8') von dem Lagerkörper (1) eingeschlossen sind.

6. Hydraulisch dämpfendes Buchsengummilager nach Anspruch 4,
**dadurch gekennzeichnet, dass** bei dem die Kanalelemente (8, 8') ausbildenden U-Profil der Übergang zwischen dem axial innen liegenden Schenkel und der die Schenkel verbindenden Seite abgerundet ist.

7. Hydraulisch dämpfendes Buchsengummilager nach Anspruch 4 oder 6, bei welchem mindestens an einem der axialen Enden zwischen dem Lagerkörper (1) und den Kanalelementen (8, 8') ein hohlzylindrisches Formteil (10) zur Ausbildung eines vorzugsweise radial wirkenden Anschlags eingeschoben ist,
**dadurch gekennzeichnet, dass** auf der die Schenkel des U-Profils verbindenden Seite der Kanalelemente (8, 8') mindestens eine radial nach innen weisende Noppe (11) angeordnet ist, die in eine entsprechende Ausnehmung des Formteils (10) eingreift.

8. Hydraulisch dämpfendes Buchsengummilager nach Anspruch 6,
**dadurch gekennzeichnet, dass** auf der die Schenkel des U-Profils verbindenden Seite der Kanalelemente (8, 8') ein nach axial außen verlaufender Hinterschnitt (9) ausgebildet ist.

9. Hydraulisch dämpfendes Buchsengummilager nach Anspruch 1,
**dadurch gekennzeichnet, dass** dieses einen Bypass (12) zum Kanal (4, 4') aufweist.

10. Hydraulisch dämpfendes Buchsengummilager nach Anspruch 1, **dadurch gekennzeichnet, dass** die Kanalelemente (8, 8') aus Aluminiumdruckguss bestehen.

11. Hydraulisch dämpfendes Buchsengummilager nach Anspruch 1, **dadurch gekennzeichnet, dass** die Kanalelemente (8, 8') durch Blechstanzteile ausgebildet sind.

12. Hydraulisch dämpfendes Buchsengummilager nach Anspruch 1 , **dadurch gekennzeichnet, dass** die Kanalelemente (8, 8') aus Kunststoff bestehen.

## Claims

1. Hydraulically damping rubber bush bearing which consists of an elastomeric bearing body (1), with an inner part (3) which is vulcanised into the latter, surrounds the bearing axis concentrically or eccentrically and consists of metal or a plastics material and at least two chambers (5, 5') connected together by a channel (4, 4') for holding a fluid damping medium, and of a holding sleeve (2) surrounding the bearing body (1),
**characterised in that**
the bearing body (1) comprises at least one groove (6, 6') which is staggered with respect to the chambers (5, 5') at the circumference, extends in the axial direction (X) through the bearing body (1) and is widened into a kidney (7, 7') in the radially inner portion, wherein the ratio of the radial external dimension of the bearing body (1) to the radial internal dimension of the holding sleeve (2) is greater in the region of the chambers (5, 5') than in the region of the groove (6, 6'), so that the bearing body (1) is radially preloaded in the region of the groove (6, 6') after being mounted in the holding sleeve (2), that the channel (4, 4') is formed by circumferential channel elements (8, 8'), and that the chambers (5, 5'), the channel (4, 4') which connects them as well as the damping medium form a vibratory system, wherein the channel (4, 4') is divided by the groove (6, 6') before the bearing body (1) is mounted in the outer sleeve (2) and, after being mounted in the holding sleeve (2), the bearing body (1), radially preloaded in the region of the groove (6, 6'), is deformed such that the originally separated channel parts (4) and (4') are brought together and are sealed off both to the outside and from the kidneys (7, 7') by the elastomer, which is preloaded in this region, and appropriately shaped channel part walls (13, 13').

2. Hydraulically damping rubber bush bearing according to Claim 1,
**characterised in that** the bearing body (1) has a substantially elliptical and the holding sleeve (2) a substantially circular cross-sectional area, wherein the major axis of the elliptical cross-sectional area of the bearing body (1) extends through the chambers (5, 5') thereof and the minor axis through the groove (6, 6').

3. Hydraulically damping rubber bush bearing according to Claim 1 or 2,
**characterised in that** the bearing body (1) comprises two grooves (6, 6') lying opposite one another at its circumference.

4. Hydraulically damping rubber bush bearing according to Claim 1 or 3,
**characterised in that** the channel (4, 4') is formed by circumferential channel elements (8, 8') having a U-section which is open radially outwards.

5. Hydraulically damping rubber bush bearing according to Claim 1,
**characterised in that** the channel elements (8, 8') forming the channel (4, 4') are enclosed by the bearing body (1).

6. Hydraulically damping rubber bush bearing according to Claim 4,
**characterised in that**, in the case of the U-section forming the channel elements (8, 8'), the transition between the axially inner leg and the side which connects the legs is rounded.

7. Hydraulically damping rubber bush bearing according to Claim 4 or 6, in which a hollow cylindrical shaped part (10) for forming a preferably radially acting stop is inserted between the bearing body (1) and the channel elements (8, 8') least at one of the axial ends,
**characterised in that** at least one protuberance (11), which points radially inwards and engages in a corresponding recess of the shaped part (10), is disposed on the side of the channel elements (8, 8') which connects the legs of the U-section.

8. Hydraulically damping rubber bush bearing according to Claim 6,
**characterised in that** an undercut (9) which extends axially outwards is formed on the side of the channel elements (8, 8') which connects the legs of the U-section.

9. Hydraulically damping rubber bush bearing according to Claim 1,
**characterised in that** this comprises a bypass (12) relative to the channel (4, 4').

10. Hydraulically damping rubber bush bearing according to Claim 1,
**characterised in that** the channel elements (8, 8') consist of diecast aluminium.

11. Hydraulically damping rubber bush bearing according to Claim 1,
**characterised in that** the channel elements (8, 8') are formed by sheet-metal stampings.

12. Hydraulically damping rubber bush bearing according to Claim 1,
**characterised in that** the channel elements (8, 8') consist of a plastics material.

## Revendications

1. Palier à douille en caoutchouc à amortissement hydraulique qui est constitué d'un corps de palier (1) élastomère avec une partie intérieure (3) vulcanisée à l'intérieur, entourant concentriquement ou excentriquement l'axe du palier, en métal ou en matière plastique, et d'au moins deux chambres (5, 5'), reliées l'une à l'autre par au moins un canal (4, 4'), pour recevoir un fluide d'amortissement, ainsi que d'une douille de réception (2) entourant le corps de palier (1),
**caractérisé en ce que**
le corps de palier (1) présente au moins une rainure (6, 6') disposée décalée par rapport aux chambres (5, 5') sur la circonférence, s'étendant dans la direction axiale (X) à travers le corps de palier (1), élargie dans le segment situé radialement à l'intérieur en forme de haricot (7, 7'), le rapport de la dimension extérieure radiale du corps de palier (1) à la dimension intérieure radiale de la douille de réception (2) dans la zone des chambres (5, 5') étant plus grand que dans la zone de la rainure (6, 6'), ce qui fait qu'après montage dans la douille de réception (2), le corps de palier (1) se trouve radialement sous précontrainte dans la zone de la rainure (6, 6'), **en ce que** le canal (4, 4') est formé par des éléments de canal (8, 8') disposés tout autour dans la direction périphérique, et **en ce que** les chambres (5, 5'), le canal (4, 4') qui les relie ainsi que le fluide d'amortissement, forment un système d'amortissement de masse susceptible d'oscillations, le canal (4, 4') étant divisé avant le montage du corps de palier (1) dans la douille extérieure (2), par la rainure (6, 6'), et le corps de palier (1) sous précontrainte radiale dans la zone de la rainure (6, 6'), après montage dans la douille de réception (2), étant déformé de manière que les parties de canal (4, 4'), initialement séparées, soient réunies et rendues étanches par l'élastomère précontraint dans cette zone et des parois (13, 13') formées en correspondance des parties de canal, aussi bien vers l'extérieur que par rapport aux haricots (7, 7').

2. palier à douille en caoutchouc à amortissement hydraulique selon la revendication 1, **caractérisé en ce que** le corps de palier (1) comporte une surface de section transversale sensiblement elliptique et la douille de réception (2) une surface de section transversale sensiblement circulaire, l'axe principal de la surface de section transversale elliptique du corps de palier (1) s'étendant à travers ses chambres (5, 5') et l'axe secondaire à travers la rainure (6, 6').

3. Palier à douille en caoutchouc à amortissement hydraulique selon la revendication 1 ou 2, **caractérisé en ce que** le corps de palier (1) présente deux rainures (6, 6') opposées l'une à l'autre sur son pourtour.

4. Palier à douille en caoutchouc à amortissement hydraulique selon la revendication 1 ou 3, **caractérisé en ce que** le canal (4, 4') est formé par des éléments de canal (8, 8') disposés tout autour dans la direction de la circonférence avec un profilé en U ouvert radialement vers l'extérieur.

5. Palier à douille en caoutchouc à amortissement hydraulique selon la revendication 1, **caractérisé en ce que** des éléments de canal (8, 8') formant le canal (4, 4') sont enfermés par le corps de palier (1).

6. Palier à douille en caoutchouc à amortissement hydraulique selon la revendication 4, **caractérisé en ce que** dans le profilé en U formant les éléments de canal (8, 8'), la transition entre la branche située axialement à l'intérieur et le côté reliant les branches, est arrondie.

7. Palier à douille en caoutchouc à amortissement hydraulique selon la revendication 4 ou 6, dans lequel à au moins l'une des extrémités axiales, entre le corps de palier (1) et les éléments de canal (8, 8'), est introduit une pièce façonnée (10) cylindrique creuse pour réaliser une butée agissant de préférence radialement, **caractérisé en ce que** sur le côté des éléments de canal (8, 8'), reliant les branches du profilé en U, est disposé au moins un bouton (11) dirigé radialement vers l'intérieur qui s'engage dans un évidement correspondant de la pièce façonnée (10).

8. Palier à douille en caoutchouc à amortissement hydraulique selon la revendication 6, **caractérisé en ce que** sur le côté des éléments de canal (8, 8'), reliant les branches du profilé en U, est réalisé un détalonnage (9) s'étendant axialement vers l'extérieur.

9. Palier à douille en caoutchouc à amortissement hydraulique selon la revendication 1, **caractérisé en ce que** celui-ci présente une dérivation (12) vers le canal (4, 4').

10. Palier à douille en caoutchouc à amortissement hydraulique selon la revendication 1, **caractérisé en ce que** les éléments de canal (8, 8') sont constitués d'une fonte d'aluminium sous pression.

11. Palier à douille en caoutchouc à amortissement hydraulique selon la revendication 1, **caractérisé en ce que** les éléments de canal (8, 8') sont réalisés par des pièces estampées en tôle.

12. Palier à douille en caoutchouc à amortissement hydraulique selon la revendication 1, **caractérisé en ce que** les éléments de canal (8, 8') sont en matière plastique.
